Europäisches Patentamt

European Patent Office

Office européen des brevets

(19)

(11) **EP 0 918 673 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **97941938.9**

(22) Anmeldetag: **15.08.1997**

(51) Int Cl.[7]: **B60T 7/04**

(86) Internationale Anmeldenummer:
**PCT/EP97/04466**

(87) Internationale Veröffentlichungsnummer:
**WO 98/07602 (26.02.1998 Gazette 1998/08)**

(54) **SELBSTTÄTIG AKTIVIERTE BREMSANLAGE**

AUTOMATICALLY ACTUATED BRAKING SYSTEM

SYSTEME DE FREINAGE A ACTIONNEMENT AUTOMATIQUE

(84) Benannte Vertragsstaaten:
**DE FR GB IT**

(30) Priorität: **21.08.1996 DE 19633736**

(43) Veröffentlichungstag der Anmeldung:
**02.06.1999 Patentblatt 1999/22**

(73) Patentinhaber: **Continental Teves AG & Co. oHG**
**60488 Frankfurt (DE)**

(72) Erfinder:
• **RIETH, Peter**
**D-65343 Eltville (DE)**
• **BURGDORF, Jochen**
**D-63075 Offenbach (DE)**
• **ECKERT, Alfred**
**D-55129 Mainz Hechtsheim (DE)**

(74) Vertreter: **Dusil, Vladimir, Dipl.-Ing.**
**Continental Teves AG & Co.oHG,**
**Guerickestrasse 7**
**60488 Frankfurt am Main (DE)**

(56) Entgegenhaltungen:
DE-A- 4 120 069          GB-A- 2 053 394
US-A- 4 146 108

## Beschreibung

Aus der DE-PS 40 28 290 ist es bekannt, in Abhängigkeit von der Betätigungsgeschwindigkeit des Bremspedals einen maximalen Bremsdruck aufzubauen, der zu einer optimalen Abbremsung des Fahrzeugs führt. Da sich aber die Anhaltezeit aus einer Reflexzeit, einer Reaktionszeit, einer Bremsenansprechzeit und der eigentlichen Bremszeit zusammensetzt, kann aufgrund der Reflexzeit, der verbleibenden Reaktionszeit und der Bremsansprechzeit immer noch ein relativ langer Zeitraum vergehen, bis das Fahrzeug zum Stillstand oder in den gewünschten abgebremsten Zustand kommt. Dabei wird unter einer Reflexzeit die Zeit verstanden, die der Fahrer benötigt, um zu erkennen, daß er abbremsen muß. Die Reaktionszeit stellt die Zeit dar, die erforderlich ist, um den rechten Fuß des Fahrers aus seiner augenblicklichen Stellung (beispielsweise vom Gaspedal) zu lösen und auf das Bremspedal zu setzen. Die Bremsenansprechzeit soll die Zeit beschreiben, bis der Fahrer den Bremsvorgang eingeleitet hat, d.h. das Fahrzeug tatsächlich beginnt, negativ zu beschleunigen, also abzubremsen. Hierzu muß ein Leerweg des Bremspedals überwunden werden und ein geeigneter Druck aufgebaut werden, der die Bremsbacken hinreichend fest an die Bremsscheibe anlegt. Die eigentliche Bremszeit schließlich ist die Zeit, die dann noch benötigt wird, um das Fahrzeug zum Stillstand bzw. zu der gewünschten niedrigeren Geschwindigkeit zu bringen.

Daraus zeigt sich, daß durch den Gegenstand der DE-PS 40 28 299 ausschließlich die Bremszeit verkürzt wird, da die Bremse mit optimaler Kraft selbsttätig angezogen wird. Das vorbekannte Bremsensystem setzt allerdings eine selbsttätige Regelung der Bremskraft voraus, da der optimale Bremsdruck stark von den Witterungsverhältnissen und der Beschaffenheit der Fahrbahn (trockene Oberfläche, vereiste Oberfläche) abhängt. Aus dem DE-GM 8911963 ist es bekannt, das Bremssystem bereits ansprechen zu lassen, wenn der bisher gasgebende rechte Fuß das Gaspedal zum Wechsel auf das Bremspedal verläßt. Hierbei wird in erheblichem Maß Reaktionszeit und Bremsenansprechzeit eingespart. Bei diesem System ist es allerdings notwendig, das Fahrzeug mit einer gesonderten Manipulation durch den Fahrer in einen Zustand zu versetzen, in dem das gewünschte Verhalten auch tatsächlich eintritt. Diese Manipulation kann in dem Betätigen eines Schalters per (linkem) Fuß oder Hand bestehen. Nachteilig ist hierbei, daß der Fahrer in einer Gefahrensituation willentlich noch einen Schalter umlegen muß, um die Reaktionszeit und Bremsenansprechzeit zu verkürzen.

Aus der DE-OS 44 22 664 ist es bekannt, bei einer sehr schnellen Änderung des rechten Fußes von einer ersten Stellung in eine zweite Stellung ein Signal an die Bremsanlage abzugeben, welches zur zwangsläufigen Durchführung eines Bremsvorgangs führt. Dabei wird unter Änderung der Fußstellung das Umsetzen des Fußes vom Gaspedal auf das Bremspedal verstanden. Hierdurch läßt sich in speziellen Fällen die Reaktionszeit zwar erheblich herabsetzen. Auf der anderen Seite findet vor einer notwendigen Bremsung vielfach gar kein Umsetzen der Fußstellung statt, etwa wenn bei einer Talfahrt das Fahrzeug ohne vorherige Betätigung des Gaspedals gebremst wird. Entsprechendes gilt auch für Regeleinrichtungen, die ohne Beaufschlagen des Gaspedals die Fahrzeuggeschwindigkeit konstant halten (Tempomat, Cruise Control). Durch die genannte bekannte Einrichtung ist auch nicht sichergestellt, daß ein massiver Bremsvorgang auch dann ausgelöst wird, wenn der Fahrer z.B. zur Betätigung der Gangschaltung den Fuß schnell vom Gas nimmt und dabei in den Umgebungsbereich des Bremspedals eintaucht.

Aus der US-PS 3726369 ist es bekannt, das Bremssystem automatisch schon dann zu betätigen, wenn der Fuß des Fahrers von dem Gaspedal genommen und auf das Bremspedal gesetzt wird. Es sind dabei zwei Sensoren vorgesehen, welche das Umsetzen des Fußes steuern. Vom Prinzip her entspricht der Gegenstand dieser Schrift den in der DE-OS 44 22 664 beschriebenen Einrichtungen, wobei die zuletzt genannte Einrichtung insofern noch zusätzliche Reaktionszeit spart, als dort der Fuß des Fahrers nicht erst auf das Bremspedal aufsetzen muß, sondern eine Bremsreaktion schon dann erfolgt, wenn eine bestimmte Bewegung im Bereich des Bremspedals durch einen zugeordneten Sensor festgestellt wird.

Die vorliegende Erfindung geht daher aus von einem Verfahren der sich aus dem Oberbegriff des Anspruchs 1 ergebenden Gattung sowie einer Bremsanlage der Gattung nach Anspruch 9. Aufgabe der Erfindung ist es, den selbsttätig durchgeführten Bremsvorgang weitgehend an die Gefahrensituation anzupassen. Insbesondere soll vermieden werden, daß ein unangemessen großer Bremsvorgang dann eingeleitet wird, wenn durch diesen die für den Fahrer sich ergebenden Gefahren größer werden als der durch die automatische Bremsung möglicherweise erreichbare Nutzen. Die Erfindung versucht somit, die Einleitung des Bremsvorgangs nicht von einer vorherigen Betätigung des Gaspedals abhängig zu machen. Weiterhin ist es Aufgabe der Erfindung, Art und Umfang der Aktivierung der Bremse in sinnvoller Weise nicht nur von einem einzigen Vorgang, sondern von einer Kombination von Meßdaten abhängig zu machen und dann die selbsttätige Reaktion der Bremse an die Kombination der Meßsignale anzupassen.

Die Aufgabe wird durch die sich aus dem kennzeichnenden Teil des Anspruchs 1 ergebende Merkmalskombination gelöst. Die Erfindung besteht im Prinzip also darin, Art und Umfang der selbsttätigen Aktivierung der Bremsanlage von der Größe eines einzelnen Meßwerts oder der Kombination von Meßwerten unterschiedlicher Gattung abhängig zu machen. Es bestehen dabei eine ganze Reihe von Aktivierungsmöglichkeiten. Zum einen kann das Bremsensystem nur vorgefüllt werden, was bedeutet, daß der Bremsdruck nur so weit erhöht wird, daß die Bremsbeläge zwar an die Bremsscheibe angelegt werden, es aber noch zu keinem Bremsvorgang, d.h. einer Verminderung der Fahrzeuggeschwindigkeit durch die Bremse kommt. Eine andere Möglichkeit besteht darin, das Fahrzeug einzubremsen, d.h. für einen vorgegebenen Zeitraum mit definierter Bremskraft die Bremsbeläge an die Bremsscheibe anzulegen. Die Bremskraft kann dabei sehr gering sein (beispielsweise werden 5 bis 20 Bar Bremsdruck aufgebracht), also einem Druckbereich, wie er beim Drucksprung eines Boosters (Springerfunktion, Springerhöhe) beherrscht wird (hier ist kein ABS nötig). Schließlich kann die optimale Bremskraft auf die Bremsbeläge aufgebracht, d.h. der optimale Druck in der Bremsanlage automatisch bereitgestellt werden. Dies bedeutet aber, daß eine geregelte Bremsanlage (ABS) zur Verfügung stehen muß, da die optimale Bremskraft stark von den Fahrbahnverhältnissen, der Beladung des Fahrzeugs und anderen Größen abhängt, deren Änderung nur durch ein entsprechendes Regelsystem beherrscht werden können. Steht ein derartiges Regelsystem nicht zur Verfügung, darf der vorprogrammierte automatische Bremsvorgang immer nur so weit gehen, daß er auch bei widrigen Verhältnissen nicht zu einer Gefährdung des Fahrzeugs führen kann. Selbstverständlich ist es möglich, das Fahrzeug in Abhängigkeit von der Jahreszeit oder von dem Aufenthaltsgebiet des Fahrzeugs zu programmieren oder ggf. umzustellen, da beispielsweise zu bestimmten Jahreszeiten oder in bestimmten Regionen vereiste Straßen nicht zu erwarten sind. Es empfiehlt sich somit die Anwendung der Merkmalskombination nach Anspruch 2.

Aus dem oben Gesagten ergibt sich, daß die Art der Aktivierung der Bremsanlage nicht nur unkritisch sein soll, sondern darüber hinaus noch eine versehentliche Auslösung des selbsttätigen Bremsvorgangs weitgehend verhindert werden soll. Hierzu empfiehlt sich insbesondere die Merkmalskombination nach Anspruch 3. Hierdurch wird zum einen vermieden, daß die Einleitung von Bremsvorgängen unwahrscheinlich wird, wenn diese nicht tatsächlich gewollt sind (keine Abhängigkeit von der Betätigung des Gaspedals). Andererseits wird erheblich an Reaktionszeit dadurch gespart, daß die Aktivierung der Bremsanlage schon dann beginnt, wenn mit großer Wahrscheinlichkeit der Bremswunsch eines Fahrers erwartet werden kann. Schließlich kann noch aus dem zeitlichen Verlauf der Positionsänderung (Änderungsgeschwindigkeit oder auch Fußbeschleunigung) oberhalb des Bremspedals darauf geschlossen werden, wie stark der Wunsch des Fahrers zum Bremsen ist. Ist die Geschwindigkeit oder die Beschleunigung des Fahrerfußes in Richtung Bremspedal sehr groß, so kann vermutet werden, daß der Fahrer tatsächlich einen intensiven Bremsvorgang wünscht. Dies ist auch deshalb richtig, daß er aufgrund der fehlenden Möglichkeit, den Fuß wieder rechtzeitig stillzusetzen oder zurückzuziehen ohnedies stark bremsen würde. Andererseits läßt sich die Art der Bremsaktivierung in diesem Fall auch noch von dem Abstand des Fahrerfußes von der Oberfläche des Bremspedals abhängig machen. Treten die Beschleunigungen bzw. Fußgeschwindigkeiten in großer Entfernung von dem Bremspedal auf, so erscheint es nicht angebracht, schon zu diesem Zeitpunkt einen starken Bremsvorgang einzuleiten (Einbremsen). Es könnte in dem genannten Fall genügen, die Bremse nur vorzufüllen, d.h. die Bremsbeläge schleifen leicht an der Bremsscheibe, der Leerweg des Pedals ist aufgehoben und somit auch der notwendige Bremsweg verkürzt. Somit ändert sich durch eine derartige Aktivierung für den Fahrer nur das Bestätigungsgefühl auf dem Bremspedal. Es entsteht aber kein Rucken des Fahrzeugs durch Einbremsen und es werden auch die Bremsbeläge nicht unnötig belastet. Die Bremsanlage kann dabei derart ausgestaltet sein, daß das Bremspedal selbsttätig in Richtung Bremsstellung wandert, so daß der Fuß auf das Pedal kaum Weg und nur noch eine wesentliche Kraft ausüben kann, auf die ein Kraftsensor anspricht.

Bei einem besonders zweckmäßigen System können mehrere parallel gemessene Signale miteinander verknüpft werden. Ergibt sich beispielsweise ein vergleichsweise schwach erkennbarer Fahrerwunsch durch den oberhalb des Bremspedals stehenden Fuß, gleichzeitig aber auch ein Sicherheitssignal aufgrund eines vorausfahrenden Fahrzeugs, so können diese beiden Werte mit einander vereint werden, so daß sich ein erhöhter Bedarf an Bremskraft errechnet. Entsprechendes ergibt sich, wenn man die zu dem Sicherheitssignal zusammengefaßten Werte einzeln betrachtet, also die Eigengeschwindigkeit des Fahrzeugs, die Relativgeschwindigkeit und der Abstand zu dem vorausfahrenden Fahrzeug. Hier können auch die Größen einzeln bestimmten Bremsdruckwerten zugeordnet werden, die dann zu einem erhöhten Bedarf an Bremskraft zusammengefügt werden. Entsprechend kann man auch ein schwaches Gefahrensignal allein zum Vorfüllen der Bremsanlage oder zum leichten Einbremsen ausnutzen.

Wie weiter oben schon erläutert, ist somit die Anwendung der Merkmalskombination nach Anspruch 4 sehr zweckmäßig, da sie in der Lage ist, die Art der Aktivierung der Bremsanlage den erkannten Bedürfnissen des Fahrers stark anzupassen. Dabei ist es Ziel so viel Bremswirkung wie möglich zu erreichen, ohne den Fahrer hierbei zu gefährden oder zu belästigen. Anspruch 4 beschreibt insbesondere die Möglichkeit, die Stärke des Bremsvorgangs an die Geschwindigkeit oder die Beschleunigung der Fußbewegung anzupassen. Die Stärke des Bremsvorgangs kann aber auch zusätzlich oder ausschließlich von der gemessenen Kraft abhängig gemacht werden, mit welcher der Fuß auf das Bremspedal gedrückt wird. Die vorliegende Erfindung schafft somit die Möglichkeit, die Stärke der Fahrzeugabbremsung von mehreren Parametern abhängig zu machen. Hierzu kann ausschließlich aber auch zusätzlich gehören, die Stärke des Bremsvorgangs von der Größe einesGefahren der Umgebung berücksichtigenden Sicherheitssignals abhängig zu machen, welches wiederum von dem Abstand eines vorausfahrenden Fahrzeugs, der eigenen Fahrzeuggeschwindigkeit und der Relativgeschwindigkeit zwischen den beiden Fahrzeugen abhängen kann. Zusätzlich kann bei Vorhandensein einer geregelten Bremsanlage (ABS) noch deren Regelverhalten in Anspruch genommen werden. In diesem Fall ist es möglich, bei erkennbarem Fahrerwunsch einer starken Bremsung oder bei aus dem Gefahrensignal erkennbarer Notwendigkeit einer starken Bremsung automatisch den vollen Bremsdruck auf die Bremse zu legen, wobei dann sich andernfalls ergebende Schwierigkeiten hinsichtlich der Fahrbahnbeschaffenheit durch das Regelsystem der Bremsanlage ausgeglichen werden können.

Eine zweckmäßige Kombination der genannten Möglichkeiten ergibt sich aus der Merkmalskombination nach Anspruch 5. Dabei muß wiederum betont werden, daß bei ungeregelten Bremsanlagen nur ein Vorfüllen oder ein leichtes Einbremsen anzustreben ist, wie es beispielsweise bei der Springerfunktion eines Boosters auftritt.

Die Strategie besteht dabei darin, in Abhängigkeit von dem durch die gemessenen Signale erkennbaren Bremsbedarf des Fahrers unter Berücksichtigung der möglichen Gefährdung des Fahrers die Bremsanlage so weit wie sinnvoll zu aktivieren. Die Merkmalskombination nach Anspruch 6 beschreibt bevorzugte Möglichkeiten für den Fall, daß der Fahrer schon seinen Fuß auf das Bremspedal gesetzt hat und das Pedal betätigt. Während also bei über dem Bremspedal befindlichem Fuß das Bestehen eines Bremswunsches und dessen Größe noch weniger genau erkennbar ist, besteht im Fall der Merkmalskombination nach Anspruch 6 dieser Wunsch schon sehr deutlich und die Größe der Geschwindigkeit bzw. der Beschleunigung der Fußbewegung kann als Maß für die Höhe der gewünschten Bremskraft gewertet werden, die dann dementsprechend aufgebracht wird. Dies setzt natürlich voraus, daß die Bremsanlage überhaupt noch einen wesentlichen Weg des Pedals bei aufgesetztem Fuß gestattet (z.B. bei sehr langsamem Aufsetzen des Fußes).

Die Merkmalskombination nach Anspruch 7 sagt hierzu näheres. Es ist allerdings zu berücksichtigen, daß auch hier die Größe des auf das vorherfahrende Fahrzeug bezogenen Sicherheitssignals mit eingebracht werden kann, und zwar auch unabhängig von der Stellung oder Bewegung des Fußes oberhalb oder auf dem Bremspedal.

Eine Bremsanlage, die auch zur Durchführung des erfindungsgemäßen Verfahrens besonders geeignet ist, beschreibt die Merkmalskombination nach Anspruch 9. Danach wird durch eine erste Sensoreinrichtung nicht nur die Bewegung des Bremspedals selbst und/oder die Bewegung des Fußes oberhalb des Bremspedals überwacht und vermessen. Bei dem Sensor kann es sich dabei um einen Infrarotsensor (Anspruch 10) handeln, welcher mit Hilfe eines Infrarotstrahls den Fußabstand vom Sensor vermißt. Der Sensor kann aber auch kapazitiv (Anspruch 11) sein, indem er die sich durch die Bewegung des Fahrerfußes ergebenden Feldänderungen (abweichender Feldwiderstand des Fußes) feststellt. Eine andere Möglichkeit kann darin bestehen, mit Hilfe von Hall-Sonden zumindest den Abstand oder die Bewegung der Pedale zu vermessen. Ebenso können optische Sensoren oder Ultraschallsensoren eingesetzt werden. Wichtig ist, wie schon betont, daß die Form der selbsttätigen Aktivierung, also Vorfüllen, leicht Einbremsen, an den Fahrerwunsch angepaßtes starkes Einbremsen oder eine volle Bremsung durchzuführen, immer von der Größe eines oder mehrerer Meßergebnisse abhängen soll.

Eine besonders einfache Anordnung für den Sensor ergibt sich durch die Merkmalskombination nach Anspruch 10. Danach wird dieser selbst durch das Pedal geschützt, kann aber den Raum oberhalb des Pedals durch eine Durchgangsöffnung überwachen, durch welche er die beispielsweise Infrarotsignale oder optischen Signale abstrahlt. Will man vermeiden, wie das durchaus zweckmäßig sein kann, daß ein einziger Sensor, der beispielsweise im Bereich der Spritzwand angebracht sein kann, sowohl die Bewegung des Fußes als auch die Bewegung der Pedale überwacht, so empfiehlt sich die Merkmalskombination nach Anspruch 12. Der Vorteil besteht hier darin, daß die abgegebenen Meßsignale einem oberhalb des Pedals befindlichen Fuß und einem auf dem Pedal befindlichen Fuß eindeutig zugeordnet werden können. Außerdem ist es hierdurch möglich, das System leicht und eindeutiger abzugleichen, indem bekannt ist, daß der erste Sensor den Abstand des Fußes vom Pedal in der Höhe von 0 mißt, wenn der zweite Sensor den Beginn einer Bewegung des Pedals feststellt.

Gemäß der Merkmalskombination nach Anspruch 9 ist in einer zweiten Sensoreinrichtung noch ein Kraftsensor vorgesehen. Hierdurch kann insbesondere eine geregelte Bremsanlage, deren Regelung auch von der vom Fahrer ausgeübten Pedalkraft abhängt, vergleichsweise leicht angesteuert werden. Es ergeben sich hierdurch erhebliche Vereinfachungen im Regelsystem und eine dementsprechende Kostenersparnis. Der Kraftsensor kann in den in das Boosterinnere führenden Kraftweg eingefügt sein. Er kann z.B. ein Piezosensor auf der Pedalfläche, ein Kraftsensor in der Kolbenstange des Boosters oder in einem Kraft übertragenden Gelenk sein.

Das erwähnte Sicherheitssignal läßt sich mittels der in Anspruch 15 angegebenen Merkmalskombination gewinnen. Dabei werden mehrere Eingangswerte in sinnvoller Weise verknüpft.

Hierzu kann beispielsweise ein Rechenwerk gemäß Anspruch 16 dienen, das die einzelnen Gefahrenparameter in geeigneter Weise bewertet und gewichtet. Ein entsprechendes Rechenwerk kann auch für die im Zusammenhang mit dem Fahrerfuß und dem Bremspedal sich ergebenden Rechenwerke gemäß der Merkmalskombination der Ansprüche 13 und 14 eingesetzt werden.

Für die Bremsanlage ist es nun sehr zweckmäßig, die Merkmale nach Anspruch 17 anzuwenden, indem die aus den einzelnen Rechenwerken abgegebenen Werte in einem Koordinierwerk miteinander zweckmäßig verknüpft und somit eine geeignete Größe gewonnen wird, welche den automatisch einzustellenden Bremsdruck bestimmt.

Für die hier beschriebene Bremsanlage ist es besonders zweckmäßig, einen Bremsdruckgeber gemäß Anspruch 18 vorzusehen, der unabhängig vom Fahrerfuß ansteuerbar (Fremdansteuerung) ist und somit die wünschenswerte Art und Größe der Aktivierung festlegt (z.B. Booster, Pumpe; Druckspeicher).

Ein Ausführungsbeispiel der Erfindung wird nun anhand der Zeichnung erläutert. Darin zeigt:

Fig. 1 ein erfindungsgemäß mit Sensoren versehenes Bremspedal und

Fig. 2 in symbolischer Darstellung eine Draufsicht auf das Bremspedal nach Fig. 1 und

Fig. 3 die Verknüpfung mehrerer den Bedarf an Bremskraft anzeigende Signale zur Ansteuerung eines Bremsdruckgebers.

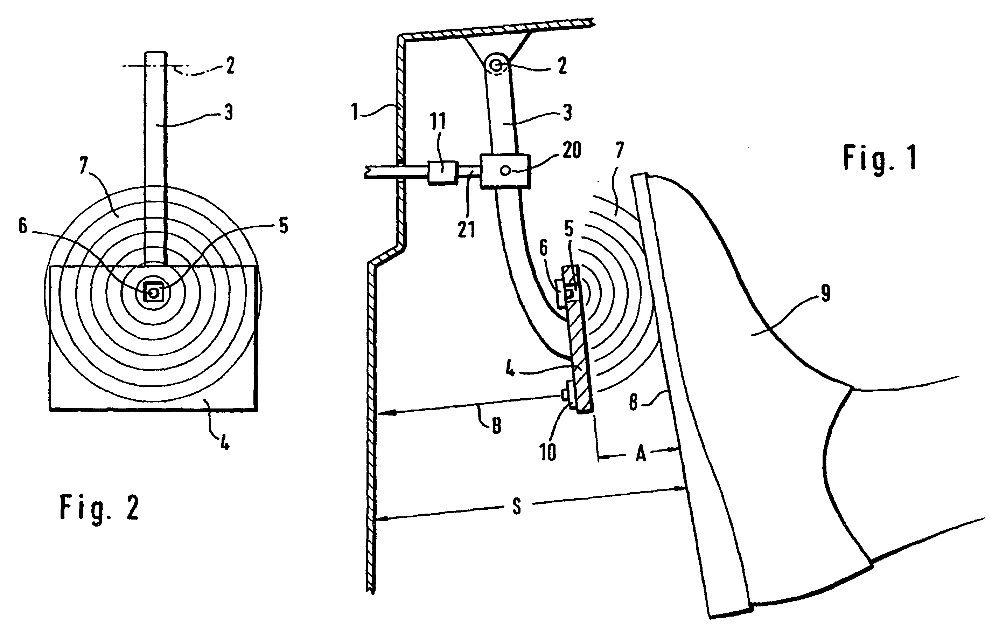

In Fig. 1 ist die Innenfläche eines Fahrzeugs im Bodenbereich des Bremspedals gezeigt. Dieses wird durch die Spritzwand 1 begrenzt, welche ortsfest gegenüber dem Fahrzeugchassis ist. An der Spritzwand 1 oder an einem anderen fahrzeugfesten Teil ist über ein Schwenklager 2 der Bremshebel 3 schwenkbar aufgehängt. Der Bremshebel 3 ist mit einem Bremspedal 4 versehen, so daß die beiden Teile einstückig miteinander verbunden sind. In dem Bremspedal 4 befindet sich eine Durchgangsöffnung 5, an deren in Fig. 1 linken Ende ein erster Sensor 6 montiert ist. Dieser Sensor kann ein Infrarotsensor, ein Ultraschallsensor, ein optischer Sensor, ein kapazitiver Sensor oder ein anderer geeigneter Sensor sein. Der Sensor strahlt ein Feld 7 ab, welches stark vereinfacht etwa kugelförmig ist. Der Sensor ist gleichzeitig mit einer nicht dargestellten Meßeinrichtung versehen, mit der der Abstand A der unteren Schuhfläche 8 des Fußes 9 gemessen werden kann. Durch entsprechende nicht dargestellte Auswertungs- oder Berechnungseinrichtungen läßt sich nicht nur der Abstand A, sondern gleichzeitig auch noch die Geschwindigkeit $\dot{A}$ und die Beschleunigung $\ddot{A}$ des Fußes gegenüber einem Bezugspunkt bestimmen. Bevorzugt wird als Bezugspunkt die Oberfläche des Bremspedals 4. Diese Größen lassen sich zur Festlegung der benötigten Art und Form der Bremsenaktivierung ausnutzen. Der Sensor kann hierzu aber auch an anderer Stelle in dem Bodenraum beispielsweise an der Spritzwand unterhalb des Bremspedals 4 befestigt sein.

Bevorzugt kann als erster Sensor ein kapazitiver Sensor eingesetzt werden. Dabei werden werden beispielsweise auf der dem Fuß 9 zugewandten Seite des Bremspedals 4 zueinander kapazitiv wirkende Elektroden flächig ausgelegt. Dabei können diese Elektroden zwei größere, im wesentlichen in einer Ebene angeordnete voneinander beabstandete kapazitive Flächen sein. Die Flächen können aber auch ineinander bespielsweise spiralförmig verschachtelt sein. An den so gebildeten Kondensator wird eine Meßfrequenz angelegt. Durch den sich annähernden Fuß wird aufgrund von dessen gegenüber dem Umfeld abweichender Dielektrizitätskonstante das Feld (Kapazität) verstimmt, so daß die Annäherung des Fußes gemessen werden kann.

Eine andere Möglichkeit für den Sensor besteht in der Verwendung eines Ultraschallsensors. Die Lage von dessen Membran sollte in etwa mit der dem Fuß zugewandten Begrenzungskante der Durchgangsöffnung 5 abschließen, so daß der Ultraschallwandler in die Durchgangsöffnung eingepaßt ist. In Fig. 1 ist noch auf der (in Fig. 1 linken) Unterseite des Pedals 4 ein zweiter Sensor 10 angedeutet, der ebenfalls ein Wegsensor ist. Dieser Wegsensor mißt den von der Pedale 4 zurückgelegten Weg, sobald der Fuß 9 auf die Pedale 4 aufsetzt. Dabei muß dieser Wegsensor nicht mit Meßrichtung auf die Spritzwand 1 an der Unterseite der Pedale angebracht sein. Es genügt, daß er an einer geeigneten Stelle angeordnet ist, an der er direkt oder indirekt den durch die Pedale 4 zurückgelegten Weg messen kann. Er kann beispielsweise auch an einem geeigneten Punkt im Bremshebel 3 oder an der an den Bremshebel über ein Gelenk 20 angelenkten Kolbenstange 21 befestigt sein, die zu einem nicht dargestellten Bremskraftverstärker (Booster) führt. Auch innerhalb des Boosters ist somit noch eine Wegmessung des Pedalswegs 10 möglich. Durch den Sensor 10 wird somit das Verhalten des Fußes auf der Pedale beschrieben und in Abhängigkeit von dem durch die Pedale zurückgelegten Weg B bzw. der Pedalgeschwindigkeit $\dot{B}$ oder der Pedalbeschleunigung $(\ddot{B})$ kann ein geeigneter Bremsdruck selbsttätig in der Bremsanlage eingestellt werden. Es erscheint aber auch möglich, daß die Funktionen der Sensoren 6 und 10 durch einen einzigen Sensor wahrgenommen werden, der beispielsweise den Abstand, die Änderung des Abstandes oder die Beschleunigung der unteren Fläche des Fußes überwacht, unabhängig davon, ob nun der Fuß auf der Pedale 4 aufsitzt oder nicht.

Da erfindungsgemäß die Bremse schon in einer geeigneten Weise aktiviert wird, wenn der Fuß 9 sich der Pedale 4 nähert, ist die erfindungsgemäße Bremsanlage hervoragend geeignet, beim Aufsetzen des Fußes auf das Pedal den Bremsdruck mit Hilfe eines Kraftsensors zu bestimmen. Da nämlich die Bremse selbsttätig schon den üblichen Leerweg überwunden hat, bevor der Fuß 9 auf das Pedal 4 aufsetzt, werden von dem Fuß auf dem Pedal nur vernachlässigbar kleine Wege zurückgelegt, während der Bremsdruck in der Bremsanlage fast ausschließlich durch die von dem Fahrer aufgewandte Fußkraft bestimmt wird. Auf diese Weise kann somit beispielsweise der Wegsensor 10 entfallen und durch einen Kraftsensor 11 ersetzt werden, der in Fig. 1 symbolisch in die Kolbenstange 21 eingefügt ist. Selbstverständlich kann der Kraftsensor 11 auch zusätzlich zu dem Wegsensor 10 Anwendung finden.

Fig. 2 zeigt eine Draufsicht auf das Bremspedal 4 mit Durchgangsöffnung 5 sowie dem angedeuteten sphärischen (vorzugsweise im wesentlichen kugelförmigen) Meßfeld 7. Der in der Durchgangsöffnung befestigte Sensor kann durch vom Öffnungsrand radial verlaufende Stege gehalten sein, so daß Schmutz zwischen den Stegen durchfallen kann.

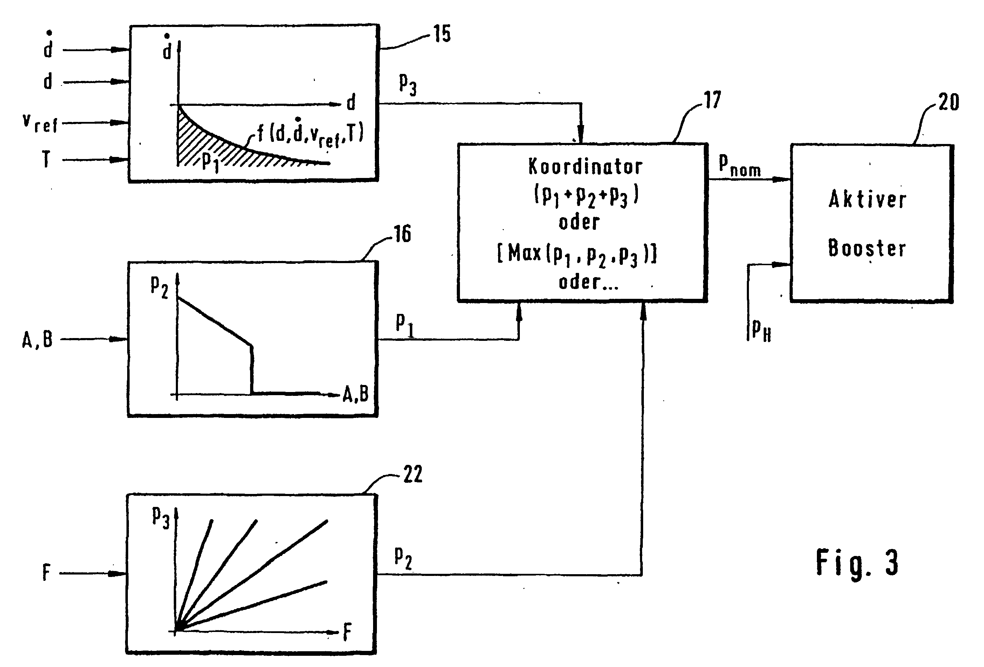

In Fig. 3 sind drei Rechenwerke 15,16,22 gezeigt. Dabei werden in das dritte Rechenwerk 15 eine Reihe von Meßwerten einer dritten Sensoreinrichtung eingegeben, die die Kollisionsgefahr des Fahrzeugs mit einem vorausfahrenden Fahrzeug beschreiben. Dies sind der Abstand d zum vorausfahrenden Fahrzeug, die Abstandsänderung pro Zeiteinheit $\dot{d}$, die eigene Fahrzeuggeschwindigkeit $v_{Ref}$ und T eine festgelegte Zeit, die die gewünschte Sicherheitszeit bis zu einem Kollisionsfall beschreibt. Diese Daten werden in dem dritten Rechenwerk verknüpft, welches Tabellen besitzt, die einen einzustellenden dritten Bremsdruck p3 aufgrund des Abstandes $d, \dot{d}, v_{Ref}, T$ sowie gegebenenfalls andere Parameter beschreiben. Hierdurch kann man den wünschenswerten dritten Bremsdruck p3 bestimmen.

Das erste Rechenwerk 16 ermittelt aus dem Abstand A bzw. B und/oder $\dot{A}$, $\ddot{A}$ bzw. $\dot{B}$, $\ddot{B}$ einen geeigneten ersten Bremsdruck p1, mit dem die Bremsanlage beaufschlagt werden sollte. In ein zweites Rechenwerk 22 wird eine der Fußkraft F entsprechende Größe angegeben. Aufgrund der Umgebungsparameter läßt sich daraus aus in dem zweiten Rechenwerk 22 befindlichen Tabellen ein geeigneter zweiter Bremsdruck p2 bestimmen. Für die Erfindung sehr wichtig ist nun der Koordinator 17, der aus den Ausgangsgrößen p1, p2,p3, die jeweils getrennt einen zweckmäßigen, automatisch in die Bremsanlage einzuführenden Druck beschreiben, einen koordinierten Druckwert bestimmt. Dieser wird in der Regel größer als jeder der drei einzelnen Drücke p1, p2,p3 sein. Beispielsweise kann er aus der Summe der drei Drücke p1, p2,p3 bestehen. Eskann aber auch ein maximaler Druck in Abhängigkeit von p1,p2,p3 gebildet werden, der weit unterhalb der Summe der einzelnen Drücke p1, p2, p3 liegt. Der sich so ergebende Druck $p_{nom}$ wird einem Bremsdruckgeber zugeführt, der entsprechend angesteuert wird. Dieser Bremsdruckgeber kann beispielsweise aus einem fremdansteuerbaren aktiven Booster bestehen, er kann aber auch ein Druckmittelspeicher, eine Druckmittelpumpe, ein hydraulischer Verstärker sein. In der üblichen Weise wird der aktive Booster zusätzlich noch durch ein Signal $P_H$ angesteuert, welches dem Istwert des Drucks im Hauptzylinder entspricht und zur Schließung des Reglkreises dient. Ein Vorladezustand kann bei entsprechendem $p_{nom}$ gleichzeitig in der Bremsanlage erhalten bleiben, obwohl der Fahrer das Pedal zurücknimmt.

Speziell läßt sich somit folgendes sagen: Ein bereits vorgeschlagenes System beinhaltet ein Regelungssystem zur Längsdynamikregelung, welcher sich mit der Regelung der längsdynamischen Vorgänge außerhalb des Grenzbereichs (ABS/ASR-Funktion) beschäftigt.

Der Regler hat die Aufgabe, Funktionen wie die Tempomatfunktion, die Fahrzeugfolgeregelung (Folgen eines vorausfahrenden Fahrzeugs) und andere längsdynamische Regelfunktionen zu vereinigen und möglichst effektiv an die Aktuatoren (Bremse, Getriebe, Motor) zu leiten, im Falle einer Bremsung mit einer limitierten Verzögerung. Desgleichen muß die Schnittstelle zum Fahrer gepflegt und Zustandsgrößen (Geschwindigkeit, Abstand, Kraft, etc.) ein-/ausgegeben werden.

Bisher vorgeschlagene Regelsysteme gehen davon aus, daß bei Fahrerintervention (Ausschalten des ICC-Systems, Betätigung der Bremse) der Regler nicht mehr aktiv ist und somit auch keine den Fahrer unterstützende Bremsungen einleiten kann. Collision Avoidance Regelungsansätze hingegen, welche zum Teil immer aktiv sind und auch Bremsungen mit hoher Verzögerung zulassen, haben das Problem, daß einer Fehldetektion möglicherweise eine Vollbremsung folgt.

Untersuchungen haben gezeigt, daß bei einer Bremsanlage mit einem gewissen Füllungsgrad (vorgefüllte Bremsanlage mit 5 - 10 bar Druck) die nachfolgende Fahrerbremsung schneller und mit geringerer Streubreite vollzogen wird. Ein Gewinn an Bremsweg ist die Folge. Ebenso wurde gezeigt, daß bei der Kenntnis der Fahrerfußbewegung, vom Gaspedal zum Bremspedal hin, eine eingesteuerte Vollbremsung (für eine gewisse Zeit T bis zur Fahrerübernahme) den Bremsweg reduzieren kann, aber auch große Risiken und Fahrerirritationen durch Fehlauslösungen hervorrufen kann.

Es wird nun u.a. vorgeschlagen, die Kenntnis des Abstands/der Relativgeschwindigkeit zu einem vorausfahrenden Fahrzeug mittels eines Abstandsensors und/oder die Sensierung des Annäherns eines Fahrerfußes an das Bremspedal zu einer Vorfüllung der Fahrzeugbremse zu nutzen. Die Erfüllung einer der beiden Bedingungen (kleiner Abstand/große Relativgeschwindigkeit, Fußbewegung) allein führt nicht zu einer merklichen Verzögerung des Fahrzeugs. Es wird aber die Bremsanlage vorgespannt, und somit wichtige Zeit, die der Fahrer normalerweise für diesen Vorgang benötigt, eingespart. Die Erfüllung beider Bedingungen machen eine größere Bremsenvorfüllung sinnvoll, da die Möglichkeit einer Fahrerbremsung nahe liegt.

Nähert sich der Fahrerfuß dem Bremspedal, so wird über einen Sensor der Abstand zu Pedal bestimmt und nach dem Unterschreiten einer Schwelle ein Vorfülldruck $p_2$ erzeugt. Dieser kann beim weiteren Annähern des Fahrerfußes an das Bremspedal konstant bleiben, sich aber auch als Funktion des Abstands und der Änderung des Abstands ändern. Der ermittelte Druck wird mittels eines aktiven Boosters in die Bremsanlage eingespeist.

Eine Vorfüllung kann aber auch aufgrund eines zu kleinen Abstands und/oder einer zu großen Eigengeschwindigkeit erfolgen. Hierbei ermittelt ein Abstandsensor den Abestand und die zeitliche Ableitung des Abstands (Relativgeschwindigkeit) zu einem vorausfahrenden Fahrzeug. Der Sicherheitsabstand setzt sich aus einer Zeit T (Time-To-Collision) und der Eigengeschwindigkeit $v_{ref}$ zusammen. Aus den Sensordaten kann näherungweise die Beschleunigung des vorausfahrenden Fahrzeugs $\dot{v}_1$ berechnet werden. Die Entscheidung, ob es zu einer Vorfüllung kommt und in welcher Höhe $p_1$, wird aufgrund der Sensordaten in Relation zum Sicherheitabstand und der Eigengeschwindigkeit getroffen. Kriterium kann hierbei das Überschreiten einer Schaltgeraden (bzw. Sicherheitsgröße), wie z.B.

$$d= T^*v_{ref} - \frac{v^2_{ref}}{2^*\dot{v}_{ref}} + \frac{v^2_1}{2+\dot{v}_1}$$

sein, wobei die Druckhöhe $p_1$ vom Grad des Überschreitens abhängig sein kann. Dabei ist $v_1$ die Geschwindigkeit des vorausfahren Fahrzeugs und $\dot{v}_1$ dessen Beschleungigung. Die Schaltgerade kann sich auch aus versuchstechnisch ermittelten Kurven zusammensetzen.

Beide Anforderungen an eine Vorfüllung werden über eine Koordinatorfunktion zusammengeführt. Diese Koordinatorfunktion kann die Summenbildung beider Drücke, eine Maximumfunktion oder andere Operatoren sein.

**Patentansprüche**

1. Verfahren zur Aktivierung einer mit einem Bremspedal versehenen Bremsanlage eines Fahrzeugs mit Hilfe des Fußes eines Fahrzeugführers, durch Bremsdruckerhöhung, **dadurch gekennzeichnet, daß** aus einer Anzahl von Meßwerten einer ersten Sensoreinrichtung (6, 10), mit der mindestens eine der Größen: Position des Fußes, Position des Pedals, Positionsänderung des Fußes und Positionsänderung des Pedals erfaßbar ist, mittels eines ersten Rechenwerkes (16) ein erster Bremsdruck (p1) ermittelt wird; aus einer Anzahl von Meßwerten einer zweiten Sensoreinrichtung (11), mit der eine von dem Fuß auf die Bremsbetätigungsein-richtung ausgeübte Kraft erfaßbar ist, mittels eines zweiten Rechenwerkes (22) ein zweiter Bremsdruck (p2) ermittelt wird; aus einer Anzahl von Meßwerten einer dritten Sensoreinrichtung, die eine Kollisionsgefahr des Fahrzeugs mit einem vorausfahrenden Fahrzeug beschreiben, mittels eines dritten Rechenwerkes (15) ein dritter Bremsdruck (p3) ermittelt wird; und aus den drei Bremsdrücken mit einem Koordinator (17) ein koordinierter Druckwert (pnom) ermittelt wird, der die Summe oder den Maximalwert der drei Bremsdrücke (p1, p2, p3) darstellt und mit dem ein Bremsdruckgeber zur entsprechenden Erhöhung des Bremsdrucks beaufschlagt wird.

2. Verfahren nach Anspruch 1, **dadurch gekennzeichnet, daß** eine Bewertungseinrichtung die Meßwerte jeweils mit einem oder mehreren definierten gespeicherten Zuständen wie Straßenzustand vergleicht und die Art der Aktivierung der Bremsanlage von dem Ergebnis des Vergleichs abhängig ist.

3. Verfahren nach Anspruch 1 oder 2, **dadurch gekennzeichnet, daß** die Position (A) und/oder die Positionsänderung (A', A'') des Fußes (9) oberhalb der Bremsbetätigungseinrichtung (4) gemessen wird.

4. Verfahren nach einem der vorhergehenden Ansprüche, **dadurch gekennzeichnet, daß** die Aktivierung der Bremsanlage in Abhängigkeit von dem Meßereignis bzw. den Meßergebnissen in einem Vorfüllen, einem Bremsen, einem Einstellen eines geeigneten Bremsdruckes oder einem Aufbringen des maximalen Bremsdruckes besteht.

5. Verfahren nach einem der vorhergehenden Ansprüche, **dadurch gekennzeichnet, daß** die Bremsanlage vorgefüllt oder eingebremst wird, wenn der Abstand (A) des Fußes von der Bremsbetätigungseinrichtung (4) einen ersten vorgegebenen Abstandswert unterschreitet und/oder die zu der Bremsbetätigungseinrichtung hin gerichtete Bewegungsgeschwindigkeit (A') und/oder Beschleunigung (A'') einen entsprechenden Vorgabewert überschreitet und/oder die gemessene Sicherheitsgröße (d, d', vref) einen hinreichend großen Wert erreicht hat.

6. Verfahren nach einem der vorhergehenden Ansprüche, **dadurch gekennzeichnet, daß** die Bremsanlage eingebremst oder auf volle Bremskraft gebracht wird, wenn der Fuß (9) an dem Bremspedal (4) anliegt und die zum Bodenblech (1) hin gerichtete Bewegungsgeschwindigkeit (B') und/oder Beschleunigung (B'') und/oder die Kraft des Fußes (9) einen entsprechenden Vorgabewert überschreitet.

7. Verfahren nach einem der vorhergehenden Ansprüche, **dadurch gekennzeichnet, daß** die in der Bremsanlage eingestellte Bremskraft von der gemessenen Geschwindigkeit (A', B') und/oder Beschleunigung (A'', B'') des Fußes bzw. des Bremspedals (4) abhängt.

8. Verfahren nach einem der vorhergehenden Ansprüche, **dadurch gekennzeichnet, daß** das von der dritten Sensoreinrichtung abgegebene dritte Bremsdrucksignal (p3) aus mindestens einer der Größen: Geschwindigkeit des Fahrzeugs, Eigenbeschleunigung des Fahrzeugs, Abstand zu einem vorausfahrenden Fahrzeug, Relativgeschwindigkeit zu einem vorausfahrenden Fahrzeug und Beschleunigung eines vorausfahrenden Fahrzeugs abgeleitet wird.

9. Bremsanlage mit einer Bremsbetätigungseinrichtung, insbesondere einem Bremspedal, auch zur Durchführung eines Verfahrens nach einem der vorhergehenden Ansprüche, **gekennzeichnet durch** eine erste Sensoreinrichtung (6, 10) im Bereich der Bremsbetätigungseinrichtung (4), mit der eine Position (A, B) und eine Positionsänderung (A', B'') eines oberhalb oder auf der Bremsbetätigungseinrichtung befindlichen Fußes (9) und/oder der Bremsbetätigungseinrichtung (4) erfaßbar ist;eine zweite Sensoreinrichtung (11), mit der eine von dem Fuß auf die Bremsbetätigungseinrichtung ausgeübte Kraft erfaßbar ist;eine dritten Sensoreinrichtung, mit der eine Kollisionsgefahr des Fahrzeugs mit einem vorausfahrenden Fahrzeug erfaßbar ist; sowie eine Bewertungseinrichtung, mit der die Bremsanlage in Abhängigkeit von den **durch** die Sensoreinrichtungen erfaßten Werten aktivierbar ist.

10. Bremsanlage nach Anspruch 9, **dadurch gekennzeichnet, daß** die erste Sensoreinrichtung einen ersten Sensor (6) umfaßt, der ein Infrarotsensor oder ein Ultraschallsensor ist und im Bereich der dem Fuß (9) abgewandten Pedalfläche befestigt ist und über eine Durchgangsöffnung (5) in dem Bremspedal (4) den dem Fuß zugewandten Umgebungsbereich (7) des Bremspedals überwacht.

11. Bremsanlage nach Anspruch 9, **dadurch gekennzeichnet, daß** die erste Sensoreinrichtung einen ersten Sensor (6) umfaßt, der ein kapazitiver Sensor ist und flächig auf die dem Fuß zugewandte Fläche des Bremspedals (4) aufgebracht ist.

12. Bremsanlage nach einem der Ansprüche 9 bis 11, **dadurch gekennzeichnet, daß** die erste Sensoreinrichtung einen zweiten Sensor (10) umfaßt, der den Abstand und/oder eine Abstandsänderung des Pedals (4) gegenüber einem Bezugspunkt überwacht.

13. Bremsanlage nach einem der Ansprüche 9 bis 12, **dadurch gekennzeichnet, daß** ein erstes Rechenwerk (16) vorgesehen ist, das aufgrund der Ausgangswerte der ersten Sensoreinrichtung (6, 10) einen zu aktivierenden ersten Bremsdruck (p1) bestimmt.

14. Bremsanlage nach einem der Ansprüche 9 bis 13, **dadurch gekennzeichnet, daß** ein zweites Rechenwerk (22) vorgesehen ist, das aufgrund der Ausgangswerte der zweiten Sensoreinrichtung (11) einen zu aktivierenden zweiten Bremsdruck (p2) bestimmt.

15. Bremsanlage nach einem der Ansprüche 9 bis 14, **dadurch gekennzeichnet, daß** die dritte Sensoreinrichtung mindestens eine der Größen: Geschwindigkeit des Fahrzeugs, Abstand zu einem vorausfahrenden Fahrzeug und Relativgeschwindigkeit zu einem vorausfahrenden Fahrzeug mißt und/oder eine Berechnungseinrichtung die Eigenbeschleunigung und die Beschleunigung des vorausfahrenden Fahrzeugs berechnet.

16. Bremsanlage nach Anspruch 15, **dadurch gekennzeichnet, daß** ein drittes Rechenwerk (15) vorgesehen ist, das aufgrund einer vorgegebenen Sicherheitszeit (T) sowie der Ausgangswerte der dritten Sensoreinrichtung einen zu aktivierenden dritten Bremsdruck (p3) festgelegt.

17. Bremsanlage nach einem der Ansprüche 9 bis 16, **dadurch gekennzeichnet, daß** ein Koordinierwerk (17) vorgesehen ist, das aus den Ausgangsgrößen (p1, p2, p3) der drei Rechenwerke (16, 22, 15) einen geeigneten Bremsdruck (pnom) bestimmt.

18. Bremsanlage nach einem der Ansprüche 9 bis 17, **dadurch gekennzeichnet, daß** ein unabhängig von der Fußbetätigung ansteuerbarer Bremsdruckgeber (20) vorgesehen ist, der in Abhängigkeit von den Ausgangssignalen der Bewertungseinrichtung den bei der Aktivierung anzuwendenden G1 Bremsdruck abgibt.

**Claims**

1. A process for actuating a brake system of a vehicle equipped with a brake pedal with the help of the driver's foot by way of brake pressure increase, **characterized in that** a first brake pressure (p1) is determined by means of a first arithmetic unit (16) from a number of measured values of a first sensor device (6,10) by which at least one of the following quantities, i.e., position of the foot, position of the pedal, change of position of the foot and change of position of the pedal can be detected; a second brake pressure (p2) is determined by means of a second arithmetic unit (22) from a number of measured values of a second sensor device (11) by which a force applied by the foot to the brake actuating unit can be detected; a third brake pressure (p3) is determined by means of a third arithmetic unit (15) from a number of measured values of a third sensor device which describe a risk of collision of the vehicle with a vehicle driving in front; and a coordinated pressure value (pnom) is determined from the three brake pressures by a coordinator (17) which represents the sum or the maximum value of the three brake pressures (p1, p2, p3) and by which a brake pressure generator is acted upon for the corresponding increase of the brake pressure.

2. A process according to claim 1,
   **characterized in that** an evaluation unit compares the measured values with one or several defined memorized conditions, such as road conditions, and that the type of actuation of the brake system depends on the result of the comparison.

3. A process according to claim 1 or 2,
   **characterized in that** the position (A) and/or change of position (A',A'') of the foot (9) is measured above the brake actuating unit (4).

4. A process according to any one of the preceding claims,
   **characterized in that** the actuation of the brake system depends on the measuring result or the measuring results and comprises the steps precharging, braking, adjustment of an appropriate brake pressure, or application of the maximum brake pressure.

5. A process according to any one of the preceding claims,
   **characterized in that** precharging or initial braking occurs in the brake system as soon as the distance (A) between the foot and the brake actuating unit (4) falls below a first specified distance value, and/or the speed of movement (A') towards the brake actuating unit and/or acceleration (A'') exceeds a corresponding specified value, and/or the safety value measured (d,d',v$_{ref}$) has reached a sufficiently high value.

6. A process according to any one of the preceding claims,
   **characterized in that** the brake system is initially braked or brought to full brake force when the foot (9) is in contact with the brake pedal (4) and the speed of movement (B') towards the floor panel (1) and/or acceleration (B'') and/or the force of the foot (9) exceeds a corresponding specified value.

7. A process according to any one of the preceding claims,
   **characterized in that** the brake force set in the brake system depends on the speed measured (A', B') and/or acceleration (A'',B'') of the foot or the brake pedal (4).

8. A process according to any one of the preceding claims,
   **characterized in that** the third brake pressure signal (p3) supplied by the third sensor device is derived from at least one of the following quantities, i. e., the speed of the vehicle, the vehicle's own acceleration, the distance with respect to a vehicle driving in front, the relative speed with respect to a vehicle driving in front, and the acceleration of a vehicle driving in front.

9. A brake system with a brake actuating element, in particular a brake pedal, also for carrying out the processes according to any one of the preceding claims,
   **characterized by** a first sensor device (6,10) in the area of the brake actuating unit (4) permitting to sense a position (A,B) and a change in position (A', B'') of a foot (9) located above or on the brake actuating unit (4); a second sensor device (11) permitting to sense a force applied by the foot to the brake actuating unit; a third sensor device permitting to detect a risk of collision of the vehicle with a vehicle driving in front; and an evaluation unit permitting to actuate the brake system in dependence on the values sensed by the sensor devices.

10. A brake system according to claim 9,
    **characterized in that** the first sensor device comprises a first sensor (6) which is an infrared sensor or an ultrasonic sensor and is mounted in the area of the pedal surface facing away from the foot (9) and monitors the area (7) of the brake pedal facing towards the foot through an opening (5) in the brake pedal (4).

11. A brake system according to claim 9,
    **characterized in that** the first sensor device comprises a first sensor (6) which is a capacitive sensor and is mounted on the surface of the brake pedal (4) facing towards the foot.

12. A brake system according to any one of claims 9 to 11,
    **characterized in that** the first sensor device comprises a second sensor (10) which monitors the distance and/or the change in distance of the pedal (4) with respect to a reference point.

13. A brake system according to any one of claims 9 to 12,
    **characterized in that** a first arithmetic unit (16) is provided which determines a first brake pressure (p1) to be actuated on the basis of the output values of the first sensor device (6, 10).

**14.** A brake system according to any one of claims 9 to 13,

**characterized in that** a second arithmetic unit (22) is provided which determines a second brake pressure (p2) to be actuated on the basis of the output values of the second sensor device (11).

**15.** A brake system according to any one of claims 9 to 14,

**characterized in that** the third sensor device measures at least one of the following quantities, i. e., speed of the vehicle, distance from a vehicle driving in front, and relative speed with respect to a vehicle driving in front, and/or a calculation device calculates the own acceleration and the acceleration of the vehicle driving in front.

**16.** A brake system according to claim 15,

**characterized in that** a third arithmetic unit (15) is provided which determines a third brake pressure (p3) to be actuated on the basis of a predefined safety time (T) and of the output values of the third sensor device.

**17.** A brake system according to any one of claims 9 to 16,

**characterized in that** a coordination unit (17) is provided which determines an appropriate brake pressure (pnom) based on the output values (p1,p2,p3) output by the three arithmetic units (16,22,15).

**18.** A brake system according to any one of claims 9 to 17,

**characterized in that** a brake pressure generator (20) which can be actuated independently of the foot's actions is provided, which supplies the brake pressure that is to be applied during the activation in dependence on the output signals of the evaluation unit.

**Revendications**

**1.** Procédé pour activer un système de freinage d'automobile prévu d'une pédale de frein, au moyen d'un pied du conducteur, en augmentant la force de frein, **caractérisé en ce que** d'un nombre de valeurs mesurées d'un palpeur premier (6, 10) par l'intermédiaire duquel au moins l'une des quantités suivantes: position du pied, position de la pédale, changement de la position du pied et changement de la position du pédale, est déterminable, une première force de frein (p1) est mesurée par une calculatrice électronique (16) première; que d'un nombre de valeurs mesurées d'un palpeur secondaire (11) par l'intermédiaire duquel une force exercée par le pied sur le dispositif à commande de frein est déterminable, une seconde force de frein (p2) est mesurée par une calculatrice électronique (22); que d'un nombre de quantités d'un palpeur troisième décrivant un danger de collision avec un véhicule dévancère, une troisième force de frein (p3) est mesurée par une calculatrice électronique (15) troisième ; et que de ces trois forces de frein une valeur de force (pnom) coordinée est déterminée par un coordinateur (17), formant la somme ou la valeur maximum des trois forces de frein (p1, p2, p3) et étant appliquée à une génératrice de force de frein pour augmenter la force de frein de manière correspondante.

**2.** Procédé selon la revendication 1, **caractérisé en ce qu'**un valuateur compare les valeurs mesurées avec un ou plusieurs d'états définis et inscrits, comme la viabilite de la route, et que la manière d'actionnement du système de freinage est dépendante du résultat de la comparaison.

**3.** Procédé selon les revendications 1 ou 2, **caractérisé en ce que** la position (A) et/ou le changement de position (A', A") du pied (9), est mesuré au-dessus du dispositif à commande de frein (4).

**4.** Procédé selon l'une des revendications précédentes, **caractérisé en ce que** l'activation du système de freinage en réponse de l'évènement mesuré ou des valeurs mesurées consiste d'un préchargement, d'un procédé de freinage, d'un réglage d'une force de freinage apte ou d'une application de la force de freinage maximum.

**5.** Procédé selon l'une des revendications précédentes, **caractérisé en ce que** le système de freinage est préchargé ou mis en oeuvre aussitôt que la distance (A) du pied du système de commande de frein (4) dépasse une première valeur de distance allouée et/ou aussitôt que la vitesse de mouvement (A') dirigée vers le système à commande de frein et/ou l'accélération (A") surpasse une valeur allouée correspondante et/ou la quantité de sécurité mesurée (d, d', vref) atteint une valeur suffisamment grande.

**6.** Procédé selon l'une des revendications précédentes, **caractérisé en ce que** le système de freinage est mis en oeuvre ou causé d'exercer la force de freinage maximum quand le pied (9) est placé à la pédale de frein (4) et la vitesse de mouvement (B') dirigée vers la tôle de fond (1), et/ou l'accélération (B") et/ou la force de pied (9) surpasse une valeur allouée correspondante.

**7.** Procédé selon l'une des revendications précédentes, **caractérisé en ce que** la force de freinage réglée dans le système de freinage est déterminée

par la vitesse (A',B') et/ou l'accélération (A", B") du pied ou de la pédale de frein (4).

8. Procédé selon l'une des revendications précédentes, **caractérisé en ce que** le signal de force de freinage (p3) troisième généré par le palpeur troisième est dérivé au moins de l'une des quantités suivantes : vitesse de l'automobile, l'accélération propre de l'automobile, distance d'une automobile devancère et l'accélération d'une automobile devancère.

9. Système de freinage comportant un dispositif à commande de frein, en particulier une pédale à frein, pour accomplir le procédé selon l'une des revendications précédentes, **caractérisé par** un premier palpeur (6, 10) au domaine de dispositif à commande de frein (4) pour palper une position (A, B) et un changement de position (A', B') d'un pied (9) se trouvant au-dessus ou sur le dispositif à commande de frein, et/ou du dispositif à commande de frein (4) ; un palpeur (11) secondaire pour palper une force exercée par le pied sur le dispositif à commande de frein; un troisième palpeur pour palper un danger de collision avec une voiture devancère; et un dispositif d'évaluation pour activer le système de freinage en réponse des valeurs mesurées par les palpeurs.

10. Système de freinage selon la revendication 9, **caractérisé en ce que** le système-palpeur premier comporte un palpeur premier (6) formant un palpeur-infrarouge ou un palpeur-ultra-son et étant fixé au domaine de la surface de pédale détournée du pied (9) et surveillant à travers d'une ouverture de passage (5) prévue dans la pédale de frein (4), le domaine ambiant (7) de la pédale de frein tournée vers le pied.

11. Système de freinage selon la revendication 9, **caractérisé en ce que** le système-palpeur premier comporte un palpeur (6) premier formant un palpeur capacitive et étant appliqué de manière platte sur la surface de la pédale de frein (4) tournée vers le pied.

12. Système de freinage selon l'une des revendications 9 à 11, **caractérisé en ce que** le système-palpeur premier comporte un palpeur second (10) surveillant la distance et/ou un changement de distance de la pédale (4) d'un point de référence.

13. Système de freinage selon l'une des revendications 9 à 12, **caractérisé en ce qu'** une première calculatrice (16) est prévue déterminant sur la base des valeurs de sortie du système-palpeur (6,10) premier, une force de freinage (p1) première à activer.

14. Système de freinage selon l'une des revendications 9 à 13, **caractérisé en ce qu'**une calculatrice secondaire (22) est prévue déterminant sur la base des valeurs de sortie du système-palpeur (11) secondaire, une force de frein (p2) secondaire à activer.

15. Système de freinage selon l'une des revendications 9 à 14, **caractérisé en ce que** le système-palpeur troisième mesure au moins l'une des quantités suivantes: la vitesse de l'automobile, la distance d'une automobile devancère et la vitesse relative vis-à-vis une automobile devancère et/ou qu'une calculatrice calcule l'accélération propre et l'accélération de la voiture devancère.

16. Système de freiange selon la revendication 15, **caractérisé en ce qu'**une calculatrice troisième (15) est prévue fixant, sur la base d'un temps de sécurité (T) alloué et des valeurs de sortie du système-palpeur troisième, une force de freinage (p3) troisième à activer.

17. Système de freinage selon l'une des revendications 9 à 16, **caractérisé en ce qu'**un système à coordiner (17) est prévu déterminant une force de freinage (pnom) apte des valeurs de sortie (p1, p2, p3) des trois calculatrices (16, 22, 15).

18. Système de freinage selon l'une des revendications 9 à 17, **caractérisé en ce qu'**une génératrice de force de frein (20) commandable indépendemment de l'actionnement du pied est prévue, générant en réponse des signaux de sortie du dispositif d'évaluation la force de freinage G1 à appliquer dans l'activation.

Fig. 1

Fig. 2

Fig. 3